# EUROPÄISCHE PATENTSCHRIFT

(11) **EP 2 185 483 B1**
(45) Veröffentlichungstag und Bekanntmachung des Hinweises auf die Patenterteilung: **06.11.2019**
(21) Anmeldenummer: 08803760.1
(22) Anmeldetag: 05.09.2008
(51) Int. Cl.: C04B 7/52, C04B 28/04, C09K 8/46

(54) **Verfahren zur Herstellung von hyperfeinem Zement**
Process for producing hyper-fine cement
Procédé pour la preparation de ciment hyperfin

(30) Priorität: 05.09.2007 DE 102007042078
(43) Veröffentlichungstag der Anmeldung: 19.05.2010
(60) Teilanmeldung: 12172257.3
(73) Patentinhaber: EPG (Engineered nanoProducts Germany) AG, 64347 Griesheim (DE)
(72) Erfinder: GENOLET, Luis, 66111 Saarbrücken (DE); SCHMIDT, Helmut, 66130 Saarbrücken-Güdingen (DE)
(74) Vertreter: Held, Stephan
(86) Internationale Anmeldenummer: PCT/EP2008/061791
(87) Internationale Veröffentlichungsnummer: WO 2009/030758

(56) Entgegenhaltungen:
- EP-A- 1 236 701
- WO-A-90/14322
- WO-A-2008/106461
- DD-A1- 159 874
- DE-A1- 3 627 283
- DE-A1- 3 722 652
- GB-A- 470 365
- JP-A- 10 231 515
- JP-A- 2003 137 630
- US-A- 5 086 850
- US-A- 5 417 760
- US-A- 5 776 244
- ARMANDO GARCÍA-LUNA ET AL: "High strength micro/nano fine cement" 2ND INTERNATIONAL SYMPOSIUM ON NANOTECHNOLOGY IN CONSTRUCTION,, 1. Januar 2006 (2006-01-01), Seiten 285-291, XP009110640
- BATH F.: "Planeten-Kugelmühlen für die Herstellung von Nanopartikeln" CHEMIE INGENIEUR TECHNIK, Bd. 77, Nr. 9, 2005, XP002511134 Wiley-VCH Verlag GmbH&Co. KG, Weinheim

## Beschreibung

Die vorliegende Erfindung betrifft ein Verfahren zur Herstellung eines hyperfeinen Zements mit einer Teilchengröße D₅₀ unter 1 µm.

Zemente, wie Portland-Zemente, werden üblicherweise über einen Brenn-Prozess aus natürlichen Rohstoffen hergestellt Dabei entstehen sogenannte Klinker Durch Aufmahlen der Klinker über ein Trockenmahlverfahren entsteht ein feines Pulver, der sogenannte Zement Klinker müssen trocken vermahlen werden, da der entstehende Zement sonst abbindet und unbrauchbar wird Zemente sind hydraulisch Das heißt sie binden mit Wasser zu einem kompakten Formkörper ab; dabei entsteht aus dem wichtigen Baustein der Klinker, dem sogenannten Monocalciumsilicat Tricalciumsilicat, das in feinen Nadeln kristallisiert, die sich innig verfilzen und so die Festigkeit des Zementsteins bewirken
Zementmörtel sind wässrige Anmischungen des gemahlenen Zements mit Sand Betone sind wässrige Anmischungen des gemahlenen Zements mit gröberem Kies

Die Partikelgröße der gemahlenen Klinker liegt üblicherweise im Bereich oberhalb von 10 µm Da die Partikelgröße relativ uneinheitlich ist, werden in der Regel die Prozentzahlen genannt, die unterhalb einer gewissen Größe liegen. Ein Maß für die Feinheit, das sich in der Zementindustrie eingebürgert hat, ist der sogenannte Blaine-Wert. Dabei wird eine bestimmte Luftmenge durch ein genormtes Bett aus gemahlenem Zement gepumpt und die Zeit gemessen, die dafür benötigt wird Je feiner das Korn ist, umso größer ist die dazu benötigte Zeit Ein anderer Wert ist der sogenannte D₅₀-Wert Er gibt an, wie viel Gewichtsprozent der Körnung unterhalb eines angegebenen Durchmessers liegt Je feiner die Klinker gemahlen werden, umso höher wird in der Regel die Festigkeit des Mörtels oder des Betons.

Essentiell beim Mahlen von Zement ist, dass er trocken, d.h. in Abwesenheit von Wasser gemahlen werden muss Trockenmahlprozesse sind in der damit erreichbaren Partikelgröße nach unten deutlich begrenzt, da im Trockenen die Rekombinationsgeschwindigkeit der Partikel deutlich höher als zum Beispiel bei wässrigen Nassmahlverfahren ist, da an den auseinandergebrochenen Grenzflächen Ladungen entstehen, die die Partikel rasch wieder verbinden

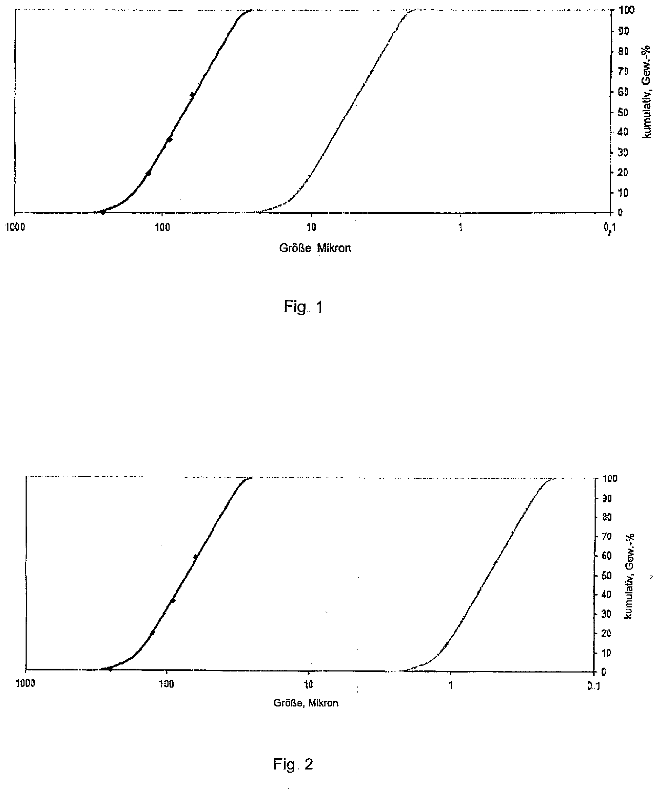

Handelsüblicher Portlandzement besitzt eine mittlere Teilchengrößenverteilung mit einem D₅₀-Wert in der Größenordnung von 70 µm Zemente mit einem D₅₀-Wert von 10 µm oder etwas darunter werden als ultrafeine Zemente bezeichnet, handelsübliche ultrafeine Zemente weisen einen D₅₀-Wert im Bereich von 3 bis 8 µm auf, siehe Figur 1. Sie werden aus normalen Zementen durch Abtrennen der gröberen Fraktionen durch verschiedene Trennverfahren erhalten.

Ultrafeine Zemente werden insbesondere als Zuschläge zu gröberen Mischungen im Bereich der Erdöl- und Erdgasindustrie eingesetzt. So gewinnt in den letzten Jahren z B Mörtel auf Basis von ultrafeinem Zement bei Fels- und Bodeneinspritzungen zur Verfestigung oder Abdichtung immer mehr an Bedeutung Hinsichtlich der Verwendung von ultrafeinen Zementen in der Öl- und Gasindustrie sollten diese Sorten ein ausgezeichnetes Penetrationsvermögen und eine ausgezeichnete Festigkeit und Haltbarkeit aufweisen, damit sie für die Druckzementierung von Ölquellen-Matrices bzw. -Formationen, insbesondere für die Gas- und Wasserkontrolle (GOR (Gas-Öl-Verhältnis) und WOR (Wasser-Öl-Verhältnis)), verwendet werden können.

Zur Herstellung von ultrafeinen Zementen ist eine Trockenvermahlung üblich, da dies einfach und schnell durchgeführt werden kann, aber sie erfordert eine sorgfältige Anpassung der Mahlbedingungen an die jeweilige Probe. Neben Trockenmahlverfahren sind auch Nassmahlverfahren unter Verwendung von Wasser bekannt, wie z.B. von Naudts, A., Landry E. "New On-site Wet Milling for the preparation of Ultrafine Cement-based Grouts", 3rd International Speciality Conference on Grouting and Ground Treatment, 10-12. Feb. 2003, New Orleans, Louisiana, USA, beschrieben Ein solches Nassmahlen mit Wasser ist aber nur möglich, wenn der ultrafeine Zement vor Ort in situ unmittelbar vor der Einspritzung oder Behandlung hergestellt wird, bevor er hart wird.

Andere Herstellungsverfahren für ultrafeinen Zement sind ein Verfahren, bei dem ultrafeine Additive mit feineren Teilchen in den Zement gegeben werden (Clarke, B., "Performance characteristics of microfine cement", ASCE preprint 84-023, Atlanta, Georgia, American Society of Civil Engineers, New York) und ein Verfahren, bei dem feine Nebenprodukte aus den normalen Zementherstellungsstufen gesammelt werden (US-A-5417760). Als Additive, die einige Mischungseigenschaften verbessern und den Blaine-Wert des Zements verringern, werden von Naudts, A., Landry E., Hooey, S., Naudts, W., "Additives and Admixtures in Cement-based Grouts", 3rd International Speciality Conference on Grouting and Ground Treatment, 10-12. Feb. 2003, New Orleans, Louisiana, USA, Schlacke, Feinsilica und Flugasche genannt.

Ultrafeine Zemente dienen zur Verfestigung oder Abdichtung von lockerem bzw. porösem Gestein, wobei auch eine Penetration des mit Wasser angerührten Zements in kleinere Poren erzielt werden soll. Da aber viele Gesteine Poren im unteren Mikrometer-Bereich oder sogar unterhalb 1 µm aufweisen, ist das Verfahren in solchen Fällen nicht einsetzbar und daher insgesamt sehr limitiert. Besonders bei der Ausbeutung von Erdgaslagerstätten ist dies gravierend, da Gas sehr einfach auch durch sehr feine Poren aus dem Gestein entweichen kann und damit in vielen Erdgasquellen sehr hohe Verluste auftreten.

DE-A1-3627283 beschreibt eine Ultrafeinmahlung von Zementmehl in Mischung mit einem Fluorkohlenwasserstoff in einer Mühle auf eine Teilchengröße von weniger als 10 Mikron.

A. Garcia-Luna et al.: "High strength micro/nano fine cement", 2nd International symposium on nanotechnology in construction, 1. Januar 2006, S. 285-291, beschreibt die hochenergetische Trockenvermahlung von Zement, so dass 50% des Pulvers eine Teilchengröße unter 1 µm aufweisen. In EP-A-1236701 und US-A-5417760 werden ebenfalls Trockenmahlverfahren zur Herstellung von Zement niedriger Dichte bzw. ultrafeinem Zement beschrieben.

In F. Bath, Chemie Ingenieur Technik 2005, Bd. 77, Nr. 9, S. 1276-1278 wird der Einsatz von Planeten-Kugelmühlen für die Herstellung von Nanopartikeln beschrieben.

US-A-5086850 betrifft ein Verfahren zur Richtungsänderung eines Bohrlochs durch Bildung eines Zementstopfens an der gewünschten Stelle des Bohrlochs, wobei Zementpartikel im Mikrometerbereich eingesetzt werden.

DE-A1-3722652 beschreibt ein Verfahren zur Herstellung einer Zementsuspension mit einer Teilchengröße von etwa 3 bis 6 Mikron, die zur Bodenverfestigung oder - abdichtung als Injektionsmittel eingesetzt werden kann. US-A-5776244 betrifft einen Mörtel umfassend Zementteilchen mit einer Größe im Mikrometerbereich, der zur Abdichtung von Gestein einsetzbar ist.

JP-A-2003137630 beschreibt ein nicht brennbares Bauteil aus mithilfe von Zement verpressten Holzfasern.

DD 159874 A1 betrifft ein spezielles organisches Mahlhilfsmittel zur Vermahlung von Zement im Trockenverfahren.

Die Aufgabe bestand nun darin, ein Verfahren zur alternativen Vermahlung von Zement auf Teilchengrößen kleiner 1 µm bereitzustellen. Dieser soll sich für Verfahren zur Abdichtung oder Verfestigung von porösen Formkörpern, Gesteinen oder porösen Formationen eignen, mit dem auch sehr feine Poren von Gesteinen so abgedichtet werden können, das selbst Erdgas unter Druck nicht entweichen kann. Der erhaltene Zement soll auch in sehr feine Poren von Gesteinen eingepumpt werden können und dort aushärten.

Die Aufgabe konnte überraschenderweise durch ein Verfahren zur Herstellung eines hyperfeinen Zements mit einer Teilchengröße D₅₀ < 1 µm gelöst werden, das die Nassvermahlung von Zement oder Zementklinker in einem nichtwässrigen Lösungsmittel umfasst, wobei der Zement oder Zementklinker in Anwesenheit eines Mahlhilfsmittels vermahlen wird und als nichtwässriges Lösungsmittel Alkohol verwendet wird. Da der nach dem erfindungsgemäßen Verfahren erhaltene Zement mit einem D₅₀-Wert unter 1 Mikrometer auch in sehr feine Poren eindringen kann, ist er für die Abdichtung von Gesteinen, insbesondere bei Erdgasquellen von außerordentlich hoher Bedeutung. Im folgenden wird die Erfindung ausführlich beschrieben

Figur 1 zeigt die Teilchengrößenverteilung von einem herkömmlichen Portlandzement (fette Linie, Typ EN 197-1 I CEM II/B-S 32.5 R) und einem handelsüblichen ultrafeinen Zement (feine Linie). Figur 2 zeigt die Teilchengrößenverteilung des gemäß Beispiel 1 hergestellten hyperfeinen Zements (feine Linie) im Vergleich zum Portlandzement von Figur 1, der als Ausgangsmaterial verwendet wurde.

Die Teilchengröße wird hier in dieser Beschreibung als D₅₀-Wert (Teilchengröße D₅₀) angegeben Diese Größenangabe ist auf dem Zementgebiet üblich Die Teilchengröße D₅₀ gibt an, wie viel Gewichtsprozent der Probe aus Teilchen mit einer Größe unterhalb eines angegebenen Durchmessers bestehen Eine Teilchengröße D₅₀ kleiner 1 µm bedeutet also, dass 50 Gew.-% der Probe aus Teilchen mit einem Durchmesser kleiner 1 µm bestehen. Entsprechend gibt ein D₉₅-Wert an, dass 95 Gew.-% der Probe eine Teilchengröße unter der angegebenen Länge aufweisen

Je nach Teilchengröße wird hierfür die Teilchengrößenverteilung durch verschiedene Messverfahren bestimmt: bis zu 20 bis 40 µm: Siebanalysen; unter 10 µm: optische Zählverfahren, elektrische Zählverfahren, Sedimentationstechniken; unter 1 µm: Laserbeugungsverfahren. Bei den ultrafeinen Zementen der Erfindung, wie die in den Beispielen erhaltenen, kann der D₅₀-Wert durch optische Vermessung unter dem Mikroskop ermittelt werden, die Bestimmung durch Laserbeugung ist aber präziser

Als zu vermählendes Zementausgangsmaterial kann jeder handelsübliche Zement oder Zementklinker eingesetzt werden, wobei der Einsatz von Zement bevorzugt ist Es können alle bekannten Zementklinker- und Zementsorten verwendet werden, z.B und ohne Beschränkung Portlandzementklinker, Portlandzement, Hüttenzement, Puzzolanzement, Tonerdezement, Asbestzement und Quellzement, wobei Portland-zemente bevorzugt sind. Es kann zweckmäßig sein, einen Zement mit einer relativ kleinen Teilchengröße als Ausgangsmaterial einzusetzen, z.B um den erforderlichen Energieeintrag für die erfindungsgemäße Hyperfeinzermahlung zu minimieren, es ist aber genauso möglich, mit grobkörnigeren Zementsorten oder Zementklinker zu beginnen. Bei Einsatz von Zementklinker ist im allgemeinen ein mehrstufiger Prozess mit Grob- und Feinzerkleinerung sinnvoll, wobei die grobe Zerkleinerung auch durch trockenes Vermahlen erfolgen kann.

Die Erfindung beruht auf der überraschenden Feststellung, dass üblicher Zement, bevorzugt Portland-Zement, in flüssiger Phase zu deutlich kleineren Korngrößen vermahlen werden kann als dies im Trockenen möglich ist. Dies gelang jedoch nicht in wässrigen Phasen, sondern in nichtwässrigen Lösungsmitteln. Dementsprechend umfasst das Verfahren der Erfindung die Nassvermahlung von Zement oder Zementklinker in einem nichtwässrigen Lösungsmittel.

Das Lösungsmittel sollte weitgehend frei von Wasser sein bzw. einen sehr niedrigen Wassergehalt aufweisen. Je nach Lösungsmittel ist es oft üblich, dass kleine Mengen Wasser etwa als Verunreinigung enthalten sind, was in der Regel für das Verfahren nicht störend ist, so dass aufwendige Aufreinigungsverfahren nicht erforderlich sind. Der Wassergehalt des Lösungsmittels sollte 10 Gew.-%, bevorzugt 5 Gew.-% nicht übersteigen, z.B. kann er im Bereich von 5 bis 1 Gew.-% oder 2,5 bis 1 Gew.-% liegen, ohne das Verfahren zu beeinträchtigen. Lösungsmittel mit weniger als 1 Gew.-% Wasser oder ganz ohne Wasser sind natürlich zumindest genauso geeignet. Die eingesetzten Lösungsmittel sind Alkohole, wie Methanol, Ethanol, n-Propanol, Isopropanol, Butanole, Hexanole und Cyclohexanol, wobei Isopropanol besonders bevorzugt ist.

Zu der zu vermahlenden Mischung aus Zementklinker oder Zement und nichtwässrigem Lösungsmittel werden zusätzlich ein oder mehrere sogenannte Mahlhilfsmittel zugegeben. Durch die Anwesenheit eines Mahlhilfsmittels beim Mahlvorgang kann die Zerkleinerung der Zementteilchen zusätzlich verbessert werden, z.B. indem ein geringerer Energieeintrag erforderlich ist, die Dauer des Mahlvorgangs verkürzt werden kann und/oder noch kleinere Teilchengrößen möglich sind. Der Einsatz von Mahlhilfsmittel ist in der Zementindustrie bekannt und es können alle für die Vermahlung von Zement bekannten Mahlhilfsmittel eingesetzt werden Solche sind z.B. in Zementhandbüchern aufgelistet.

Als besonders vorteilhaft hat sich die Verwendung von Triethanolamin erwiesen Triethanolamin ist in polaren Lösungsmitteln wie Alkoholen löslich Das Mahlhilfsmittel ist vorzugsweise in dem eingesetzten organische Lösungsmittel löslich

Mahlhilfsmittel sind in der Regel polare Moleküle, die gegebenenfalls ionischen Charakter aufweisen. Ohne sich an eine Theorie binden zu wollen, wird davon ausgegangen, dass diese Mahlhilfsmittel sich beim Auseinanderbrechen eines Partikels rasch an die geladenen Oberflächen anlagern und damit die Rekombination verhindern Im Trockenen ist eine Diffusion der Moleküle der Mahlhilfsmittel an die jeweiligen aufgebrochenen Flächen sehr schwierig Daher ist der Effekt von Mahlhilfsmitteln im Trockenen begrenzt; dies kann man an den Grenzen beim Vermahlen der Klinker im Trockenen unschwer erkennen In den erfindungsgemäß eingesetzten organischen Lösungsmitteln dagegen kann sich die Wirkung der Mahlhilfsmittel besonders gut entfalten.

Beispiele für Mahlhilfsmittel, die in der Zementindustrie eingesetzt werden, sind Glycole, wie Ethylenglycol und Propylenglycol, Amine und deren Salze, z.B. Triethanolamin und dessen Salze, Alkohole, Hydroxycarbonsäuren, Ligninsulfonate, Fettsäuren und deren Salze, und auch Trockenseife/Detergens als Schmiermittel und Graphit als Antistatikmittel und Schmiermittel, wobei Triethanolamin besonders bevorzugt ist. Eine besonders zweckmäßige Kombination ist daher Isopropanol als Lösungsmittel und Triethanolamin als Mahlhilfsmittel.

Die eingesetzten Mischungsverhältnisse der 3 Komponenten in der Mischung können in weiten Bereichen variieren und hängen u.a. auch von den konkreten Verbindungen und den eingesetzten Mahlbedingungen ab. Wenn Mahlhilfsmittel eingesetzt wird, kann das Gewichtsverhältnis von Mahlshilfsmittel zu Zement im allgemeinen z.B. im Bereich von 0,01 bis 1,5, bevorzugt im Bereich von 0,1 bis 0,2 liegen Auch das Gewichtsverhältnis von Lösungsmittel zu Zement kann in weiten Bereichen variieren Eine Menge an Lösungsmittel, die die Nassvermahlung ermöglicht reicht aus, die Menge an Lösungsmittel kann aber nahezu beliebig erhöht werden. Das Gewichtsverhältnis von Lösungsmittel zu Zement kann z.B. zweckmäßigerweise im Bereich von 0,05 bis 5 und bevorzugt im Bereich von 0,3 bis 1,0 liegen,

Für den Vermahlungsprozess können übliche Aggregate bzw Zerkleinerungsmaschinen, mit denen Pulver in einem Nassmahlprozess vermahlen werden können, verwendet werden. Beispiele sind Mühlen mit losen Mahlwerkzeugen wie Kugeln, Stäben oder Zylindern, z.B Kugel- Stab-, Planeten- und Schwingmühlen, Homogenisatoren, Turborührer, Rotationskugelmühlen, Rührwerksmühlen, Walzenstühle und Kolloidmühlen, wie Scheibenmühlen. Bevorzugt sind Kugelmühlen, wobei die Kugeln z.B. eine Größe im Bereich von 1 bis 50 mm aufweisen können Die Kugeln können z.B. aus Zirconiumdioxid sein. Es können aber natürlich auch Mahlwerkzeuge mit einer anderen Form eingesetzt werden. Auch Rotationskugelmühlen mit Rotor unter Stator sind geeignet.

So war es zum Beispiel möglich, in einer Kugelmühle der Firma Retsch in Isopropanol mit Triethanolamin als Mahlhilfsmittel innerhalb von 120 Minuten einen üblichen Portlandzement auf einen D₅₀-Wert von deutlich unter einem Mikrometer herunterzumahlen

Nach dem Nassvermahlen wird eine Paste, Dispersion oder Aufschlämmung von hyperfeinem Zement mit einer Teilchengröße D₅₀ kleiner 1 µm in dem nichtwässrigen Lösungsmittel erhalten. Das Mahlhilfsmittel ist ebenfalls in der Paste, Dispersion oder Aufschlämmung enthalten. Sofern es in dem Lösungsmittel löslich ist, kann es relativ einfach zumindest teilweise vom erhaltenen hyperfeinen Zement abgetrennt werden, sofern dies gewünscht wird

In der Regel wird das Lösungsmittel und gegebenenfalls auch das Mahlhilfsmittel nach dem Mahlvorgang zumindest teilweise wieder abgetrennt. Das Lösungsmittel wird gewöhnlich vollständig entfernt, um ein trockenes Pulver zu erhalten. Dies kann durch jedes übliche bekannte Abtrennverfahren erfolgen, z.B. durch Filtrieren, Zentrifugieren, Dekantieren oder Abdestillieren. Falls noch im Zement zurückgebliebenes Mahlhilfsmittel weiter entfernt werden soll, kann dies mithilfe einer Wäsche erfolgen, z.B. mit dem beim Mahlvorgang verwendeten Lösungsmittel oder auch mit einem anderen organischen Lösungsmittel. Nach Bedarf kann aber auch so gearbeitet werden, dass Mahlhilfsmittel im Zement verbleibt.

Je nach Abtrennverfahren kann zunächst ein noch feuchter hyperfeiner Zement erhalten werden, z.B. beim Filtrieren oder Dekantieren. Ein solcher noch feuchter Zement kann durch Trocknen, gegebenenfalls unter Erwärmen, in ein trockenes rieselfähiges Pulver überführt werden. Der erhaltene hyperfeine Zement weist eine Teilchengröße, bestimmt als D₅₀-Wert, von weniger als 1 µm auf. So erhält man z.B. nach dem Filtrieren mit einem Filter mit entsprechend kleiner Porengröße, gegebenenfalls nach Auswaschen mit Lösungsmittel wie Isopropanol ein trockenes Zementpulver.

Der nach dem erfindungsgemäßen Verfahren erhaltene hyperfeine Zement mit einem Dso-Durchmesser unter 1 µm reagiert mit Wasser außerordentlich rasch zu einem festen Formkörper.

Dem hyperfeinen Zement können je nach Bedarf übliche Additive zugesetzt werden, wie z.B. Beschleuniger, Verzögerer und diffusionshemmende Additive (Diffusionsblocker). Diese sind in der Zementindustrie bekannt und werden je nach den gewünschten Eigenschaften des Zements verwendet.

Hinsichtlich Beispielen für solche einsetzbaren Additive wird auf Handbücher der Zement-Technologie verwiesen. Beispiele für in der Zementindustrie übliche Verzögerer sind Saccharose, Phosphonsäurederivate (PBTC) oder Tetrakaliumpyrophosphat. Beispiele für in der Zementindustrie übliche Diffusionsblocker sind lösliche Silicate und Silicofluoride, gemahlene Schlacke, Bimsstein, Diatomit, Flugasche, Silicastaub, Stearin-, Capryl- und Ölsäuren oder deren Natrium-, Ammonium-, Sulfonium- und Aluminiumsalze. Natürlich kann der Zement auch mit Sand vermischt als Mörtel verwendet werden.

Die Abbindezeit lässt sich mit in der Zementindustrie üblichen Verzögerern im Rahmen der in der Zementindustrie üblichen Grenzen einstellen. Um eine zusätzlich verbesserte Abdichtung zu erreichen, können dem Zement auch sogenannte Diffusionsblocker zugesetzt werden, wie sie zum Beispiel bei der Herstellung von wasserdichten Betonen (Sperrbeton) in der Zementindustrie üblicherweise eingesetzt werden Solche Diffusionsblocker sind z.B. in Handbüchern der Zementindustrie aufgelistet. Diese Additive sind im Handel erhältlich und werden in der Bauindustrie immer dort eingesetzt, wo z.B. wasserdichte Decken, Wände oder Böden hergestellt werden müssen

Der hyperfeine Zement kann in trockener Form mit Wasser zu einem Brei, vorzugsweise einen niedrigviskosen Brei, angerührt werden Nach dem Anrühren können mit dem Brei sehr feine Poren auch unterhalb 1 µm verfüllt werden. Damit ist es möglich, gasdichte Abdichtungen von porösen Formkörpern, Gesteinen oder Formationen zu erzielen In einer bevorzugten Ausführungsform werden dem Zement übliche Diffusionsblocker zugesetzt Mit dieser Kombination ist es möglich, vollkommen gasdichte Abdichtungen in porösen Gesteinen zu erzielen. Der hyperfeine Zement kann für jede Anwendung eingesetzt werden, für die auch herkömmliche Zemente eingesetzt werden Der hyperfeine Zement eignet sich insbesondere zur Abdichtung oder Verfestigung von porösen Formkörpern, Gesteinen oder porösen Formationen, bevorzugt für Erdölfelder und besonders bevorzugt für Erdgasfelder

Die porösen Formkörper können z.B. aus Sand, Kies, Metall, Kunststoff oder Keramik sein Poröse Formationen beinhalten geologische Formationen wie Felsen oder Böden, wobei es sich bei den porösen Formkörpern, Formationen oder Gesteinen auch um lose Gefüge von diskreten Komponenten, wie Sandteilchen oder Steinen, handeln kann, bei denen die Zwischenräume zwischen den diskreten Komponenten die Poren oder Kanäle bilden. Der poröse Formkörper kann somit auch aus einem noch nicht verfestigtem Pulver bestehen. Beispiele für poröse Formationen sind Böden und Formationen aus Sand, Erde oder Sandstein und andere mineralische Formationen, insbesondere alle Arten von Felsen bzw Gestein.

Die Abdichtung oder Verfestigung von porösen Formkörpern, Gesteinen oder porösen Formationen wird bevorzugt so durchgeführt, dass man eine Mischung aus dem hyperfeinen Zement und Wasser zubereitet, wobei nach Bedarf Additive, wie Verzögerer und Diffusionsblocker, und Sand zugesetzt werden können, und den erhaltenen Brei in die porösen Formkörper, Gesteine oder Formationen einpumpt oder infiltriert, was gegebenenfalls durch Druckanwendung unterstützt werden kann. Der in die Poren oder Kanäle der Formkörper, Gesteine oder Formationen eingedrungene Zementbrei erstarrt nach einer gewissen Zeit und sorgt so für die gewünschte Abdichtung oder Verfestigung.

Der hyperfeine Zement eignet sich auch als Zusatz für Polymere oder Bauteile aus gepressten Textilien oder Naturfasern, um den Brandschutz dieser Materialien zu verbessern.

Weitere konkrete Anwendungen des hyperfeinen Zements bzw von einem daraus hergestellten Zementbrei, Mörtel oder Beton, gegebenenfalls unter Zusatz der vorgenannten Additive, sind z.B. die Reparatur von geschädigtem Mauerwerk durch Einpressen, die Bildung von faserverstärkten Zementbauteilen durch Infiltration, die Verfestigung von losem Erdreich, die Verfestigung von Bauputz, Bauwerken und Wänden, die Abdichtung oder Sanierung von Mauerwerk, die Restaurierung von Gebäuden, die Herstellung von Bauteilen durch Infiltration von Pulver, z.B. aus Sand, Kies, Polymeren, Metall oder Mischungen davon, und das Abdichten von Deponien.

### Beispiele

### Beispiel 1

40 g Portland-Zement wurden mit 6 g Triethanolamin als Mahlhilfsmittel gemischt. Dann wurde die Mischung in 15 g Isopropanol, analysenrein, als Mahlfluidmedium dispergiert (Nassmahlverfahren) . Die Gewichtsverhältnisse der Komponenten waren wie folgt: Zement: 65,57%, Triethanolamin: 9,84%, Isopropanol: 24,59% Die Mischung wurde in eine Kugelmühle Retsch Cup Mill mit Zirconiumdioxid-Kugeln gegeben und 2 h bei 500 U/min, alternierende Zyklen, mit den folgenden Mahlbedingungen gemahlen:

| | |
|---|---|
| Menge Mahlwerkzeug (Kugeln): | 120 g (entspricht 3 g/g Zement) |
| Größe Mahlwerkzeug (Kugeln): | 3 mm |
| Mahlgeschwindigkeit (110 bis 600 U/min): | 500 U/min |
| Mahlzeit: | 120 min |

Nach Beendigung des Mahlzyklus wurden die Kugeln durch Nasssieben unter Verwendung von Isopropanol, analysenrein, abgetrennt Der erhaltene hyperfeine Zement wurde durch Verdampfung des Alkohols getrocknet. Die Teilchengrößenverteilung und der D₅₀-Wert des hyperfeinen Zements sind in Figur 2 gezeigt

### Beispiel 2

Es wurde wie in Beispiel 1 gearbeitet, außer dass statt 3 g Mahlwerkzeug/g Zement 1,5 g Mahlwerkzeug/g Zement und statt Kugeln einer Größe von 3 mm Kugeln verschiedener Größen (2 Kugeln von 20 mm, 10 Kugeln von 10 mm, 150 g Kugeln von 3 mm) verwendet wurden.

Die Teilchengrößenverteilung des erhaltenen hyperfeinen Zements war wie in Beispiel 1 Der Einsatz einer Kombination verschiedener Größen für das Mahlwerkzeug ermöglicht somit die gleichen Ergebnisse bezüglich der Teilchengrößenverteilung bei einem geringeren Gewichtsverhältnis von Zement zu Mahlwerkzeug.

## Patentansprüche

1. Verfahren zur Herstellung eines hyperfeinen Zements mit einer Teilchengröße D₅₀ < 1 µm, das die Nassvermahlung von Zement oder Zementklinker in einem nichtwässrigen Lösungsmittel umfasst, wobei der Zement oder Zementklinker in Anwesenheit eines Mahlhilfsmittels vermahlen wird und als nichtwässriges Lösungsmittel Alkohol verwendet wird.

2. Verfahren nach Anspruch 1, **dadurch gekennzeichnet, dass** nichtwässriges Lösungsmittel und Mahlhilfsmittel vom nach dem Mahlen erhaltenen hyperfeinen Zement zumindest teilweise abgetrennt werden.

3. Verfahren nach Anspruch 2, **dadurch gekennzeichnet, dass** die Abtrennung durch Filtrieren, Zentrifugieren, Dekantieren oder Abdestillieren durchgeführt wird.

4. Verfahren nach einem der Ansprüche 1 bis 3, **dadurch gekennzeichnet, dass** feuchter hyperfeiner Zement, der nach Vermahlen und gegebenenfalls teilweisem Abtrennen der anderen Komponenten zurückbleibt, zu einem rieselfähigen Pulver getrocknet wird.

5. Verfahren nach einem der Ansprüche 1 bis 4, **dadurch gekennzeichnet, dass** der Zement in einer Kugelmühle oder Rotationskugelmühle vermahlen wird.

6. Verfahren nach einem der Ansprüche 1 bis 5, **dadurch gekennzeichnet, dass** als nichtwässriges Lösungsmittel Isopropanol verwendet wird.

7. Verfahren nach einem der Ansprüche 1 bis 6, **dadurch gekennzeichnet, dass** als Mahlhilfsmittel Triethanolamin verwendet wird.

8. Verfahren nach einem der Ansprüche 1 bis 7, **dadurch gekennzeichnet, dass** der erhaltene hyperfeine Zement in trockener Form mit Wasser zu einem niedrigviskosen Brei angerührt wird.

9. Verfahren nach einem der Ansprüche 1 bis 8, **dadurch gekennzeichnet, dass** der Zement Portland-Zement ist.

## Claims

1. A process for producing a hyper-fine cement having a particle size D50 of < 1 µm, comprising wet milling a cement or a cement clinker in a non-aqueous solvent, wherein the cement or cement clinker is milled in the presence of a grinding aid and alcohol is used as non-aqueous solvent.

2. The process of claim 1, **characterised in that** the non-aqueous solvent and the grinding aid are at least partly separated from the hyper-fine cement obtained after milling.

3. The process of claim 2, **characterised in that** the separation is carried out by filtration, centrifugation, decantation, or distillation.

4. The process according to one of claims 1 to 3, **characterised in that** moist hyper-fine cement which remains after milling and optionally partial removal of the other components is dried to form a free-flowing powder.

5. The process according to one of claims 1 to 4, **characterised in that** the cement is milled in a ball mill or a rotational ball mill.

6. The process according to one of claims 1 to 5, **characterised in that** isopropanol is used as non-aqueous solvent.

7. The process according to one of claims 1 to 6, **characterised in that** triethanolamine is used as grinding aid.

8. The process according to one of claims 1 to 7, **characterised in that** the obtained hyper-fine cement in dry form is mixed with water to form a low-viscosity paste.

9. The process according to one of claims 1 to 8, **characterised in that** the cement is Portland cement.

## Revendications

1. Procédé de fabrication d'un ciment hyperfin ayant une taille de particule D₅₀ < 1 µm, qui comprend le broyage humide de ciment ou de clinker de ciment dans un solvant non aqueux, dans lequel le ciment ou clinker de ciment est broyé en présence d'un adjuvant de broyage et de l'alcool est utilisé comme solvant non aqueux.

2. Procédé selon la revendication 1, **caractérisé en ce que** le solvant non aqueux et l'adjuvant de broyage sont au moins en partie séparés du ciment hyperfin obtenu après le broyage.

3. Procédé selon la revendication 2, **caractérisé en ce que** la séparation est réalisée par filtration, centrifugation, décantation ou élimination par distillation.

4. Procédé selon l'une quelconque des revendications 1 à 3, **caractérisé en ce que** du ciment hyperfin humide, qui subsiste après broyage et éventuellement séparation partielle des autres composants, est séché pour obtenir une poudre coulante.

5. Procédé selon l'une quelconque des revendications 1 à 4, **caractérisé en ce que** le ciment est broyé dans un broyeur à boulets ou un broyeur à boulets rotatifs.

6. Procédé selon l'une quelconque des revendications 1 à 5, **caractérisé en ce que** de l'isopropanol est utilisé comme solvant non aqueux.

7. Procédé selon l'une quelconque des revendications 1 à 6, **caractérisé en ce que** de la triéthanolamine est utilisée comme adjuvant de broyage.

8. Procédé selon l'une quelconque des revendications 1 à 7, **caractérisé en ce que** le ciment hyperfin obtenu est, sous forme sèche, délayé à de l'eau de manière à obtenir une pâte de basse viscosité.

9. Procédé selon l'une quelconque des revendications 1 à 8, **caractérisé en ce que** le ciment est du ciment Portland.
